# EUROPÄISCHE PATENTSCHRIFT

(11) **EP 1 251 238 B1**
(45) Veröffentlichungstag und Bekanntmachung des Hinweises auf die Patenterteilung: **04.01.2006**
(21) Anmeldenummer: 02405273.0
(22) Anmeldetag: 08.04.2002
(51) Int. Cl.: E21B 10/44

(54) **Schlagbohrwerkzeug für Gestein**
Percussion rock drill
Marteau à percussion pour roches

(30) Priorität: 21.04.2001 DE 10119562
(43) Veröffentlichungstag der Anmeldung: 23.10.2002
(73) Patentinhaber: HILTI Aktiengesellschaft, 9494 Schaan (LI)
(72) Erfinder: Wisser, Erich, 6900 Bregenz (AT); John, Marcel, 8887 Mels (CH); Sander, Bernhard, 6800 Feldkirch (AT); Schad, Hanspeter, 9472 Grabs (CH); Surberg, Cord-Henrik, 6800 Feldkirch (AT); Coffin, Charles, 7000 Chur (CH); Vedder, Joachim, 88138 Hergensweiler (DE); Lins, Reinhard, 9475 Sevelen (CH)
(74) Vertreter: Wildi, Roland

(56) Entgegenhaltungen:
- WO-A-94/24404
- DE-A- 3 102 075
- DE-A- 4 020 242
- GB-A- 2 350 315
- US-A- 4 867 249
- PATENT ABSTRACTS OF JAPAN vol. 1997, no. 11, 28. November 1997 (1997-11-28) & JP 09 183104 A (KANEFUSA KK), 15. Juli 1997 (1997-07-15)

## Beschreibung

Die Erfindung bezeichnet ein Schlagbohrwerkzeug für Gestein wie Beton und Mauerwerk sowie eine Variante als Schlagbohranker.

Von einem Werkzeuggerät axial schlagend angetriebene Meissel sowie zumindest teilweise drehend und schlagend angetriebene Bohrer für Gestein bestehen im wesentlichen aus einem Schaft mit einem endseitigen Werkzeugkopf mit Hartstoffeinsätzen und einem am anderen endseitigen Ende angeordneten Einsteckende zur Aufnahme in das Werkzeuggerät. Bei einer Anwendung als Schlagbohranker verbleibt zumindest ein Teil des Schlagbohrwerkzeugs als verlorenes Werkzeug im Bohrloch und dient zur Verankerung im Gestein.

Nach der EP716237 wird durch einen, koaxial durch eine hohle Dübelhülse geführten, Wendelbohrer ein Bohrloch erzeugt und durch die Dübelhülse ausgeweitet, welche im Bohrloch verbleibt.

Nach der US5374140 wird als verlorenes Werkzeug ein hohler Bohrdübel mit Hartmetalleinsätzen verwendet und dieser chemisch verankert. Nach der US6145601 ist an einem chemisch verankerbaren Bohrdübel eine Bohrkopfhülse bekannt.

Nach der JP9048004 weist ein Schlagbohrwerkzeug zur Erzeugung eckiger Löcher in Holz einen eckigen hohlen Meisselschaft auf, welcher einen koaxial inneren Wendelbohrer mit einer Axialschulter führt, wobei für das abgetragene Material radiale Öffnungen im Meisselschaft angeordnet sind. Damit der Wendelbohrer schlagfrei in das Holz schneiden kann, bildet der in Richtung des Einsteckendes an der Axialschulter verjüngte Wendelbohrer mit dem Meisselschaft keine Kontaktpresspaarung aus. Zudem ist der Wendelbohrer nur in Richtung des Bohrkopfes aus dem hohlen Meisselschaft entfernbar.

Die Aufgabe der Erfindung besteht in der Realisierung eines Schlagbohrwerkzeugs für Gestein. Ein anderer Aspekt besteht in der Ausbildung als Schlagbohranker für Gestein.

Die Aufgabe wird im wesentlichen durch die Merkmale der unabhängigen Ansprüche gelöst. Vorteilhafte Weiterbildungen ergeben sich aus den Unteransprüchen.

Im wesentlichen weist ein Schlagbohrwerkzeug einen Meisselschaft prismatischen Querschnitts mit einer axialen durchgängigen Zylinderbohrung und zumindest einer radialen Öffnung sowie einen in der Zylinderbohrung drehbar geführten und axial zum Meisselkopf vorstehenden Wendelbohrer mit axialen Bohrschneiden aus Hartstoff am Bohrkopf, einem gegenüberliegenden Einsteckende und mit einem dazwischen angeordneten Axialanschlag auf, wobei der Wendelbohrer unter Bildung einer Schlagschulter am Axialanschlag in Richtung zum Bohrkopf hin radial verjüngt abgesetzt ist.

Durch die radiale Verjüngung des Wendelbohrers am Axialanschlag bildet dieser in Richtung des Bohrkopfes eine Schlagschulter als Kontaktpresspaarung aus, welche einen auf den Wendelbohrer aufgebrachten, zum Bohren in Gestein wesentlichen, Axialschlag auf den Meisselschaft überträgt und das Bohrloch entsprechend des prismatischen Querschnitts des Meisselschaftes erweitert, wodurch auch unrunde Löcher erzeugbar sind. Zudem ist nach dem Bohren der Wendelbohrer entgegen der Richtung des Bohrkopfes aus dem Meisselschaft entnehmbar.

Vorteilhaft ist der axiale Vorstand des Bohrkopfes gegenüber dem Meisselkopf im Bereich des doppelten bis des vierfachen Bohrerdurchmessers, weiter vorteilhaft etwa der dreifache Bohrerdurchmesser, wodurch das Restmaterial vor dem Meisselkopf im wesentlichen auf Scherung entlang des Versagenskegels beansprucht und somit die Abbauleistung optimiert wird.

Vorteilhaft weist der Meisselkopf axiale Meisselschneiden auf, welche weiter vorteilhaft nach innen angefast sind, wodurch das abgemeisselte Material zu dem Wendelbohrer gedrängt wird, welcher es über die Wendel und die radiale Öffnung aus dem prismatischen Loch entfernt.

Vorteilhaft sind die axialen Meisselschneiden des Meisselkopfes aus Hartstoff ausgebildet, bspw. als Hartstoffeinsätze, die verscheissfest in das Gestein eindringen.

In einer vorteilhaften Ausbildung des Schlagbohrwerkzeuges weist der als verlorenes Werkzeug ausgebildete Meisselschaft an dem, dem Meisselkopf gegenüberliegendem, Ende angeordnete Montagemittel wie Innen- oder Aussengewinde auf und verbleibt zumindest teilweise als Ankerschaft im Loch.

Vorteilhaft weist der Meisselschaft einen axial lose aufsetzbaren, hohlen Kontaktabschnitt auf, welcher mit dem Axialanschlag des Wendelbohrers eine verschleissarm drehbare Kontaktpresspaarung ausbildet und somit wiederverwendbar ist.

Vorteilhaft sind die radialen Öffnungen in dem axial lose aufsetzbaren, hohlen Kontaktabschnitt des Meisselschaftes ausgebildet, wodurch die Herstellung des, als verlorenes Werkzeug ausgebildeten, restlichen Meisselschaftes vereinfacht wird.

Vorteilhaft weist der Meisselschaft benachbart zum Meisselkopf ein Verankerungsmittel auf, welches eine formschlüssige oder kraftschlüssige Befestigung des im Loch verbleibenden Teils des Meisselschaftes zur Wandung des Lochs unterstützt.

Vorteilhaft ist das Verankerungsmittel eine axial versetzbare, optional innen axial angefaste, Spreizhülse mit axialen Einschnitten, welche innerhalb des Querschnitts des Meisselschaftes in einer umlaufenden, radial eingeschnittenen Sitznut angeordnet ist, welche eine zum Meisselkopf hin sich radial erweiternde Spreizfase aufweist, wodurch bei einer durch Zugbeanspruchung bedingten Versetzung des Meisselschafts die reibschlüssig an der Wandung des Lochs fixierte Spreizhülse radial aufgespreizt und in die Wandung eingedrückt wird, wodurch der Meisselschaft kraft- und formschlüssig verankert ist.

Vorteilhaft ist die Spreizhülse eine Spreizkappe mit einer inneren Axialanschlagkante und einer axial durchgängigen Zylinderbohrung, weiter vorteilhaft mit an der axialen Stirnseite der Spreizkappe angeordneten axiale Meisselschneiden, wodurch die abrasiv beanspruchte Spreizkappe als separates Teil einfach sowie aus einem harten und verschleissarmen Material herstellbar ist. Der restliche Meisselschaft kann somit hingegen aus einfachem zähen Material sein.

Alternativ vorteilhaft weist der Meisselschaft als Verankerungsmittel sektorweise begrenzte, zum Meisselkopf hin sich radial erweiternde Spreizecken auf, welche bei einer Drehung des Meisselschaftes aus dem Sektor heraus einen Hinterschnitt im Loch eindrücken und über diesen den Meisselschaft kraft- und formschlüssig verankern.

Alternativ vorteilhaft weist der Meisselschaft als Verankerungsmittel eine Vielzahl axial begrenzter, radialer Ausnehmungen auf, welche bei einer chemischen Verankerung des Meisselschaftes mittels durch die Zylinderbohrung injiziertes fliessfähiges und später aushärtbares Material formschlüssig ausgefüllt werden und somit den Meisselschaft formschlüssig verankern.

Die Erfindung wird bezüglich eines vorteilhaften Ausführungsbeispiels näher erläutert mit:
Fig. 1 als Schlagbohrwerkzeug
Fig. 2 als Schlagbohranker
Fig. 3 als Spreizkappe
Fig. 4 als Meisselschaft mit Spreizfasen und Ausnehmungen

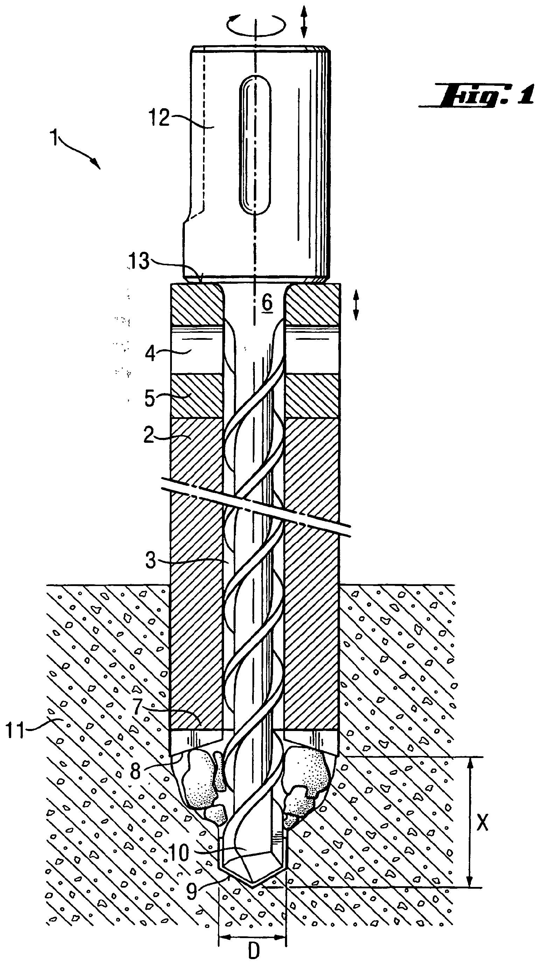

Nach Fig. 1 weist ein Schiagbohrwerkzeug 1 einen Meisselschaft 2 prismatischen Querschnitts mit einer axialen durchgängigen Zylinderbohrung 3 und einer radialen Öffnung 4 in einem lose aufgesetzten, hohlen Kontaktabschnitt 5 sowie einen in der Zylinderbohrung 3 drehbar geführten Wendelbohrer 6 auf. Der axial zu einem Meisselkopf 7 mit axialen, nach innen angefasten, Meisselschneiden 8 aus Hartstoff vorstehende Wendelbohrer 6 mit axialen Bohrschneiden 9 aus Hartstoff an einem Bohrkopf 10 weist zwischen einem gegenüberliegenden Einsteckende 12 einen Axialanschlag 13 auf, ab dem der Wendelbohrer 6 unter Bildung einer Schlagschulter in Richtung zum Bohrkopf 10 hin radial verjüngt abgesetzt ist. Der axiale Vorstand X des Bohrkopfes 10 gegenüber dem Meisselkopf 7 entspricht etwa dem dreifachen Bohrerdurchmesser D und somit dem Bereich des gerissenen Gesteins 11 vor dem Meisselkopf 7.

Nach Fig. 2 weist der als verlorenes Werkzeug ausgebildete Meisselschaft 2 nahe dem Meisselkopf 7 ein Verankerungsmittel 14 und am gegenüberliegenden Ende ein als Aussengewinde ausgebildetes Montagemittel 15 auf. Das Verankerungsmittel 14 ist als eine axial versetzbare, innen axial angefaste, Spreizhülse 16 mit axialen Einschnitten 17 ausgebildet, welche innerhalb des Querschnitts des Meisselschaftes 2 in einer umlaufenden, radial eingeschnittenen Sitznut 18 angeordnet ist, welche eine zum Meisselkopf hin sich radial erweiternde Spreizfase 19 aufweist.

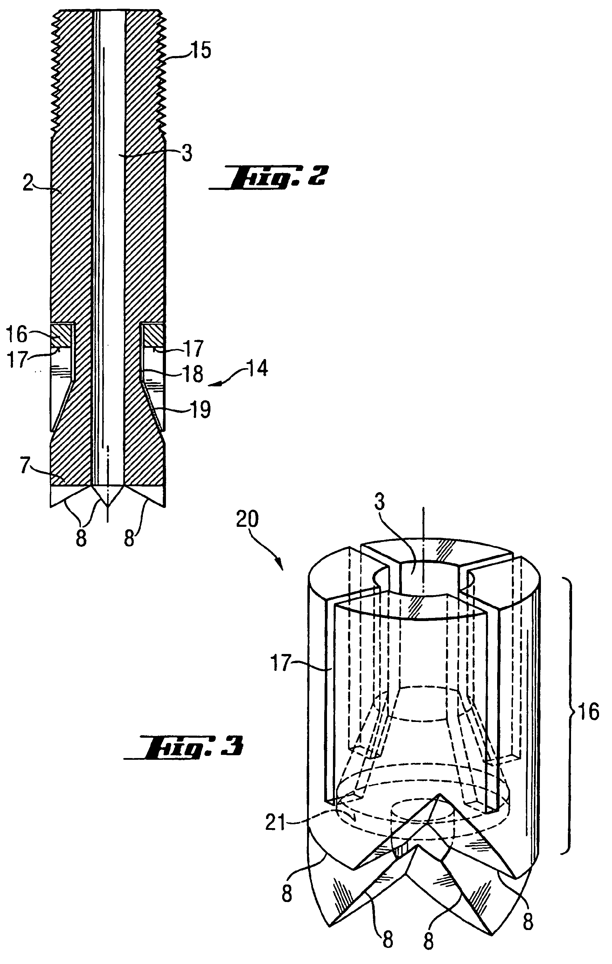

Nach Fig. 3 ist die Spreizhülse 16 mit axialen Einschnitten 17 Teil einer Spreizkappe 20 mit einer axial durchgängigen Zylinderbohrung 3 und mit einer inneren Axialanschlagkante 21 an der axialen Stirnseite der Spreizkappe 20, welche axiale Meisselschneiden 8 aufweist.

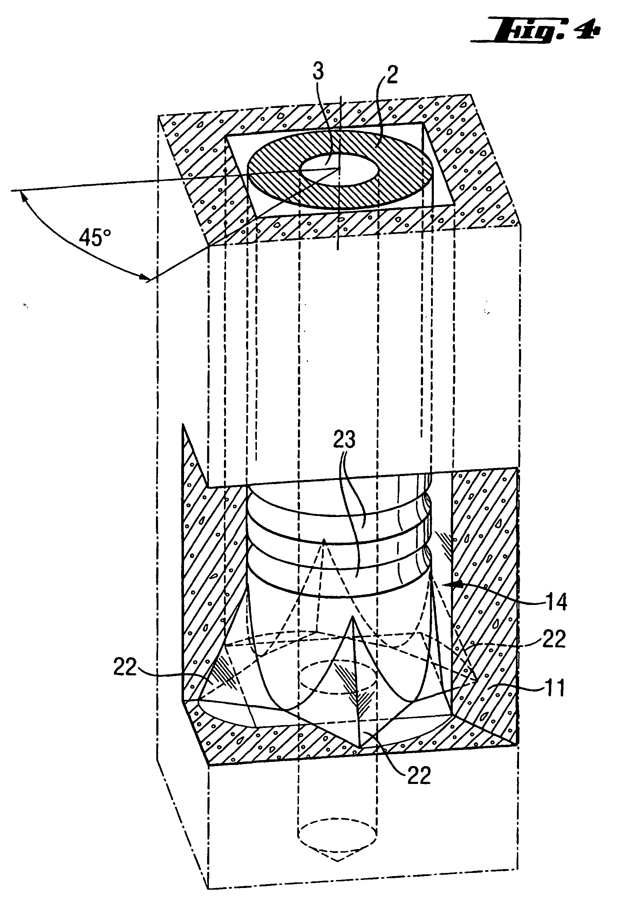

Nach Fig. 4 weist der um 45° im viereckig prismatischem Loch des Gesteins 11 verdrehte hohlzylinderförmige Meisselschaft 2 als Verankerungsmittel 14 vier sektorweise begrenzte, zum Meisselkopf 7 hin sich radial erweiternde Spreizecken 22 sowie zwei rillenförmige, axial begrenzte, radiale Ausnehmungen 23 auf.

## Patentansprüche

1. Schlagbohrwerkzeug für Gestein (11) mit einem Meisselschaft (2) prismatischen Querschnitts mit einer axialen durchgängigen Zylinderbohrung (3) und zumindest einer radialen Öffnung (4) sowie mit einem in der Zylinderbohrung (3) drehbar geführten und axial zu einem Meisselkopf (7) vorstehenden Wendelbohrer (6) mit einem Bohrkopf (10) mit Bohrschneiden (9), mit einem gegenüberliegenden Einsteckende (12) und mit einem dazwischen angeordneten Axialanschlag (13), **dadurch gekennzeichnet, dass** der Wendelbohrer (6) unter Bildung einer Schlagschulter am Axialanschlag (13) in Richtung zum Bohrkopf (10) hin radial verjüngt abgesetzt ist.

2. Schlagbohrwerkzeug nach Anspruch 1, **dadurch gekennzeichnet, dass** bei dem, bis zum Axialanschlag (13) in die Zylinderbohrung (3) des Meisselschaftes (2) eingeführten, Wendelbohrer (6) der axiale Vorstand (X) des Bohrkopfes (10) gegenüber dem Meisselkopf (7) im Bereich des doppelten bis des vierfachen Bohrerdurchmessers (D), optional der dreifache Bohrerdurchmesser (D) ist.

3. Schlagbohrwerkzeug nach Anspruch 1 oder Anspruch 2, **dadurch gekennzeichnet, dass** der Meisselkopf (7) axiale Meisselschneiden (8) aufweist, welche optional nach innen angefast sind.

4. Schlagbohrwerkzeug nach Anspruch 1, **dadurch gekennzeichnet, dass** die axialen Meisselschneiden (8) des Meisselkopfes (7) aus Hartstoff ausgebildet sind.

5. Schlagbohrwerkzeug nach einem der vorherigen Ansprüche, **dadurch gekennzeichnet, dass** der Meisselschaft (2) endseitig angeordnete Montagemittel (15) und zum Meisselkopf (7) benachbarte Verankerungsmittel (14) aufweist.

6. Schlagbohrwerkzeug nach einem der vorherigen Ansprüche, **dadurch gekennzeichnet, dass** der Meisselschaft (2) einen axial lose aufsetzbaren, hohlen Kontaktabschnitt (5) aufweist.

7. Schlagbohrwerkzeug nach Anspruch 6, **dadurch gekennzeichnet, dass** die radialen Öffnungen (4) in dem axial lose aufsetzbaren, hohlen Kontaktabschnitt (5) des Meisselschaftes (2) ausgebildet sind.

8. Schlagbohrwerkzeug nach einem der Ansprüche 5 bis 7, **dadurch gekennzeichnet, dass** das Verankerungsmittel (14) eine axial versetzbare, optional innen axial angefaste, Spreizhülse (16) mit axialen Einschnitten (17) ist, welche innerhalb des Querschnitts des Meisselschaftes (2) in einer umlaufenden, radial eingeschnittenen Sitznut (18) angeordnet ist, welche eine zum Meisselkopf (7) hin sich radial erweiternde Spreizfase (19) aufweist.

9. Schlagbohrwerkzeug nach Anspruch 8, **dadurch gekennzeichnet, dass** die Spreizhülse (16) Teil einer Spreizkappe (20) mit einer inneren Axialanschlagkante (21) und einer axial durchgängigen Zylinderbohrung (3) ist und optional an der axialen Stirnseite der Spreizkappe (20) angeordneten axiale Meisselschneiden (8) aufweist.

10. Schlagbohrwerkzeug nach einem der Ansprüche 5 bis 7, **dadurch gekennzeichnet, dass** der Meisselschaft (2) als Verankerungsmittel (14) sektorweise begrenzte, zum Meisselkopf (7) hin sich radial erweiternde Spreizecken (22) und/oder eine Vielzahl axial begrenzter, radialer Ausnehmungen (23) aufweist.

## Claims

1. Percussion drill for stone (11) with a drill stem (2) with a prism-shaped cross-sectional form with a cylindrical boring (3) that passes through it axially and at least one radial opening (4) and with a twist drill (6), that can be guided, such that it can rotate, in the cylindrical boring (3) and that projects from the bit head (7), the said twist drill (10) having a boring head (10) with borer cutters (9), with an opposite axial abutment (13) disposed in between, **characterized in that** the twist drill (6) tapers towards the boring head (10), forming a percussion shoulder on the axial abutment (13).

2. Percussion drill in accordance with claim 1, **characterized in that**, concerning the twist drill (6) that is introduced into the cylindrical boring (3) of the drill stem (2), the axial projection (X) of the boring head (10), in relation to the bit head (7), is from twice to four times the drill diameter (D), optionally three times the drill diameter (D).

3. Percussion drill in accordance with claims 1 or 2, **characterized in that** the bit head (7) has axial bit cutting edges (8) that can optionally make inward contact.

4. Percussion drill in accordance with claim 1, **characterized in that** the axial bit cutting edges (8) of the bit head (7) are made of hard material.

5. Percussion drill in accordance with one of the above claims, **characterized in that** the drill stem (2) has mounting means (15) on its end and has retaining means (14) adjoining the bit head (7).

6. Percussion drill in accordance with one of the above claims, **characterized in that** the drill stem (2) has a hollow, contact section (5) that can be put on such that it is loose axially.

7. Percussion drill in accordance with claim 6, **characterized in that** the radial openings (4) are formed in the hollow contact section (5), of the drill stem (2), that is put on such that it is loose axially.

8. Percussion drill in accordance with one of claims 5 to 7, **characterized in that** the anchoring means (14) is an axially displaceable spreading casing (16), optionally making contact in an inward axial direction, with axial notches (17), the said spreading casing being disposed, within the cross-section of the bit stem (2), in a surrounding, radially cut seat groove (18) that has an spreading bevel (19) that extends radially towards the bit head (7).

9. Percussion drill in accordance with claim 8, **characterized in that** the spreading casing (16) is part of a spreading cover (20) with an inner axial abutment rim (21) and a cylindrical boring (3) that passes through it axially and optionally has axial bit cutting edges (8) on the axial end of the spreading cover (20).

10. Percussion drill in accordance with one of claims 5 to 7, **characterized in that** the bit heat (7) has sectorally limited spreading corners (22) extending towards the bit head (7) and/or a number of axially limited, radial recesses (23) as anchoring means (14).

## Revendications

1. Outil de forage à percussion pour roche (11), comprenant une tige de burinage (2) à section prismatique pourvue d'un trou cylindrique axial traversant (3) et d'au moins une ouverture radiale (4) et comprenant un foret hélicoïdal (6) qui est guidé à rotation dans le trou cylindrique (3), dépasse axialement d'une tête de burinage (7) et est pourvu d'une tête de forage (10) avec des taillants de forage (9), d'une extrémité insérable (12) située à l'opposé et d'une butée axiale (13) située en position intermédiaire, **caractérisé en ce que** le foret hélicoïdal (6) est étagé par un rétrécissement radial formant, au niveau de la butée axiale (13), un épaulement de frappe orienté vers la tête de forage (10).

2. Outil de forage à percussion selon la revendication 1, **caractérisé en ce que**, lorsque le foret hélicoïdal (6) est introduit dans le trou cylindrique (3) de la tige de burinage (2) jusqu'à la butée axiale (13), le dépassement axial (X) de la tête de forage (10) par rapport à la tête de burinage (7) est égal à deux à quatre fois le diamètre de forage (D), optionnellement à trois fois le diamètre de forage (D).

3. Outil de forage à percussion selon la revendication 1 ou la revendication 2, **caractérisé en ce que** la tête de burinage (7) comporte des taillants de burinage axiaux (8) qui sont optionnellement biseautés vers l'intérieur.

4. Outil de forage à percussion selon la revendication 1, **caractérisé en ce que** les taillants de burinage axiaux (8) de la tête de burinage (7) sont réalisés en matière dure.

5. Outil de forage à percussion selon une des revendications précédentes, **caractérisé en ce que** la tige de burinage (2) comporte des moyens de montage (15) disposés à son extrémité et des moyens d'ancrage (14) voisins de la tête de burinage (7).

6. Outil de forage à percussion selon une des revendications précédentes, **caractérisé en ce que** la tige de burinage (2) comporte une portion de contact creuse à montage axial libre (5).

7. Outil de forage à percussion selon la revendication 6, **caractérisé en ce que** les ouvertures radiales (4) sont ménagées dans la portion de contact creuse à montage axial libre (5) de la tige de burinage (2).

8. Outil de forage à percussion selon une des revendications 5 à 7, **caractérisé en ce que** le moyen d'ancrage (14) est un manchon expansible déplaçable axialement, optionnellement à biseautage intérieur, (16) qui est pourvu d'encoches axiales (17) et qui est disposé à l'intérieur de la section transversale de la tige de burinage (2) dans une rainure de logement périphérique ménagée radialement (18), laquelle comporte un chanfrein d'expansion (19) s'élargissant radialement vers la tête de burinage (7).

9. Outil de forage à percussion selon la revendication 8,
**caractérisé en ce que** le manchon expansible (16) fait partie d'une coiffe expansible (20) pourvue d'un bord intérieur de butée axiale (21) et d'un trou cylindrique axialement traversant (3) et comporte optionnellement des taillants de burinage axiaux (8) disposés sur la face frontale axiale de la coiffe expansible (20).

10. Outil de forage à percussion selon une des revendications 5 à 7, **caractérisé en ce que** la tige de burinage (2) comporte comme moyens d'ancrage (14) des coins expansibles délimités en secteurs (22) s'élargissant radialement vers la tête de burinage (7) et/ou une pluralité d'évidements radiaux délimités axialement (23).
